# EUROPEAN PATENT SPECIFICATION

(11) **EP 1 715 555 B1**
(45) Date of publication and mention of the grant of the patent: **23.11.2011**
(21) Application number: 05380076.9
(22) Date of filing: 18.04.2005
(51) Int. Cl.: H02G 3/12

(54) **Support device**
Trägervorrichtung
Dispositif de support

(43) Date of publication of application: 25.10.2006
(73) Proprietor: Solid Perfil S.L., 08700 Igualada (Barcelona) (ES)
(72) Inventor: Caparros Tarda, Pedro, 08700 Igualada (Barcelona) (ES)
(74) Representative: Curell Aguilà, Marcelino

(56) References cited:
- US-A- 4 483 453
- US-A- 5 405 111
- US-B1- 6 423 898
- US-B1- 6 595 476

## Description

### Field of the invention

The invention relates to a support device comprising a plate with a plurality of holes, wherein the plate defines an upper edge, a lower edge, two side edges and a central section.

### State of the art

It is known the installation of partition walls that are formed by a metal structure, usually of galvanised steel, and chalk plates. The metal structure comprises U-shaped channel profiles that are arranged horizontally and that serve as bond of the partition wall with the floor and the ceiling of the room in which is installed, and partition wall profiles, that are used as montants. The partition wall profiles are likewise U-shaped and have in their base or web front bores or holes for passing through the installations present in the interior of the partition walls, such as electric, telematic, water ducts, etc. These partition wall profiles are vertically arranged between the channel profiles, mutually separated approximately between 400 and 600 mm. Nevertheless the separation between the partition wall profiles is not carried out in an exact manner and, additionally, it is usually adjusted to the dimensions of the partition wall to be installed. Thus the distances between the different partition wall profiles that will finally form a partition wall use to be variable. The partition wall is completed by the addition of chalk plates screwdown at each side of the metal structure and by a final treatment of the tips.

Usually the construction process follows the following steps:
- construction of a metal structure formed by channel profiles and partition wall profiles,
- screwdown of the chalk plates in one of the faces of the metal structure, mounting of the installations and ductings, which are located in the interior of the partition, wall,
- screwdown of the chalk plates in the second face of the structure and final joint treatment.

However, this method has some drawbacks. Thus, for example, not in all cases the installations (telematic, electric wiring boxes, etc.), are arranged in the chalk plate already screwed. That obliges to leave these installations away from their definitive location as they cannot be adhered to any surface. Therefore the cabling and the different wiring boxes of the installations are hung within the structure without any reference point of their definitive location. In the praxis this mounting method obliges the chalk plates that are still to be mounted for closing the second face of the structure to accumulate in the works, whilst in the works other operators are working performing other type of acts, such as for example, the laying of the electric cabling, etc. It is unavoidable that the chalk plates accumulated in the works suffer from damages of all type. It is possible that there exist modifications in the locations of the wiring boxes of the installations, which leads to modifications in the structure of the partition wall, and that implies an increase of the cost of the material and of the mounting costs. Furthermore it is possible that during the final checking of the installed systems some shortcomings are checked. If in this case the installation of any installation must be repeated, usually it is necessary to replace the chalk plate on which the screwdown had been carried out, and that means again an increase of cost and workforce.

Document US 6.423.898 describes an enclosure for housing cabling and associated equipment that has a frame structure including one or more elongated support members. The support members are formed with an arcuate flange extending in a direction away from the uppermost edge of the support member. The arcuate flange will support any cables that are laid over the top of the support member, with the cable following the smooth arc of the flange. This gradual transition from the vertical plane to the horizontal plane means the cable will not deform or form kinks. Cabling entering the enclosure from a direction above the flange of a support member will be less likely to be caught inadvertently in U-shaped attachment slots because of the oblique angle of the slots and the presence of the cantilever tongues.

### Summary of the invention

The objective of the present invention is to overcome the abovementioned drawbacks. This is achieved by means of a support device of the type indicated above characterised in that it comprises at least a protuberance in each of the side edges, and that it comprises a plurality of first holes in the central section, wherein each of the first holes reproduces the lower part of the protuberance, so that by means of a cut in the plate, which is straight and parallel to the side edges, at least one of the first holes forms a new protuberance. Preferably this new protuberance has the same geometry than the protuberance originally arranged in the side edge. Nevertheless that is not essential, given that although the new protuberance has a different geometry, it will be able to serve as an anchoring point, as described below. Likewise preferably the protuberance has a hook form, in which the hook has a free end orientated towards the lower edge. In this manner a better anchoring of the plate is achieved, although with a protuberance for example rectangular, the invention could basically operate in the same way.

Indeed the plate can be fixed between the partition wall profiles, so that they define a support area in order to attach the installations present in the partition walls, such as for example telematic or electric wiring boxes, water inlets (cocks, dewaterings, etc.) etc. The support device can be attached during the construction of the metal structure. In this manner the whole mounting of the installations and ductings that are located in the interior of the partition wall before beginning with the screwdown of the chalk plates of any of the faces. In this manner the whole mounting of the installations and ductings can be finished and verified, and all the necessary changes and repairing can be made before the chalk plates arrive to the works. The screwdown of the chalk plates can be made simultaneously for both faces of the partition wall and with a much higher guarantee that reworks on the same will not be necessary. All this contributes to a faster installation, a lower cost in reworks, and a lower loss of chalk plates due to damages. The plate has at least a protuberance that preferably has a hook form orientated towards the lower edge of the plate, i.e. downward once installed in the partition wall. That allows an extremely simple installation of the plate, given that it does not require screwdown. It is simply introduced in the corresponding anchoring hole and it is attached therein by gravity. In spite of the fact that it could be enough that the plate had a single protuberance in one of its side edges, advantageously the plate has a protuberance in each of its side edges and, preferably two protuberances in each of its side edges. The cost of manufacture and mounting of the plates with more than one protuberance is practically the same and, however, a much more effective attachment of the plate is achieved.

As it has been already indicated the distance between the partition wall profiles can be variable. In order to avoid the need of arranging a plurality of plates of different lengths, the plate according to the invention comprises a plurality of first holes in the central section of the plate so that each one of them defines a protuberance or hook equal to the protuberances of the side edges. In this manner, in the case that the plate is longer than the distance existing between two partition wall profiles, the plate can be cut by a straight cut that passes through one of the first holes so that the straight cut defines a new side edge, and the protuberance or hook of said first hole defines a new protuberance. The length of the plate can be thereby adjusted at will in order to be fitted between any pair of partition wall profiles. In this manner with plates of only one type it can be carried out mountings between partition wall profiles mutually separated by variable distances by only making a simple operation of adjustment consisting in a cut.

Preferably each of the first holes is at the same height than at least one of the protuberances. In this manner in the case that the plate must be cut as above indicated, the new protuberances generated when cutting the plate at the area of the first hole are arranged in the same position than the removed protuberances by the cutting operation. In this manner the plate will be attached at the same height and can be attached in the same anchoring holes.

Advantageously the plate of the support device comprises second holes wherein each one of them has at least an edge that is aligned in vertical direction with an edge of at least one of the first holes. Indeed the addition of these second holes allows to define lines (defined by the edges of the second holes and the edges of the first holes, which are aligned in vertical direction) at which the plate can be cut . That serves either as reference in order that the cutting operation produces a new side linear edge, and they can even serve as a weakening to be able to break the plate by folding. Additionally, in general, it is advisable that the plate has holes allowing the attachment of the installations, the screwdown of elements on the plates, etc. These second holes can serve to this purpose. It is also possible to include third additional holes that comply more specifically with the function of allowing the attachment of elements on the plates.

Preferably the plate of the support device additionally comprises at least an end border separated from the central section by weakening lines. In this manner the end border can be folded 90° with respect to the central section and that allows to rigidify the plate in a simple way at the works, whilst the manufacture, packaging and transport of plates can be carried out with plane plates and that allows a substantial space saving. Advantageously the weakening lines are formed by a plurality of weakening holes, preferably expanded, so that each of the first holes has an end that is aligned in vertical direction with an end of one of the weakening holes. In this manner as in the case of the second holes, when cutting the plate at the edges that are aligned in vertical direction a new linear side edge of a simple form is obtained.

Preferably the weakening lines have in each end a weakening hole that extends until one of the side edges, so that the end border defines a flange. In this manner, once the end border has been folded 90° with respect to the central section, the flange can be folded 90° with respect to the end border. The flange so folded allows a better support of the plate when it is mounted in its definitive location, as it will be explained with more detail in the examples shown in the figures.

Advantageously the support device at least comprises an attachment profile with a cross section substantially U shaped with at least an anchoring hole suitable for housing a protuberance of the plate. Indeed the plate can be attached at any place as long as it is provided with a suitable anchoring hole. In particular the anchoring holes could be pierced in the partition wall profiles. Nevertheless it is more advisable to have specific attachment profiles for this function. The attachment profiles can be of a relatively short length and can be attached on the partition wall profiles, such as for example by screwdown. The attachment profiles already have the corresponding anchoring holes in order to be able to attach the support plates.

Preferably the anchoring hole extends horizontally along all the length of the base of the attachment profile. In this manner the same attachment profile can serve for attaching plates which must be indistinctly faced towards any of the faces of the partition wall. Given that the attachment profile must not support any structural stress (that is not supported by partition wall profiles) it is not pernicious that the attachment profile has anchoring holes of large dimensions. In order that the plate can be attached in a more suitable way in the anchoring hole, especially when the latter extends horizontally along the attachment profile, it is advantageous that the anchoring hole has a plurality of notches in its lower end. The notches allow the protuberance or hook to be introduced in one of them, whereby it is prevented the plate from being free in the anchoring hole with possibility of movement in horizontal direction.

Advantageously the plate has two protuberances in each of the side edges and each attachment profile has two anchoring holes, so that each of them is faced towards one of the protuberances or hooks of the plate, and wherein each of the anchoring holes has a plurality of notches in its lower end. In this manner the support device comprises a plate and two attachment profiles. The attachment profiles are attached to the partition wall profiles approximately at the height at which it is wished to locate the corresponding installation. The plate is simply introduced in the anchoring holes laterally and it is arranged in the most suitable notches depending on the face of the partition wall in which the installation must be mounted. The exact location of the installation can be adjusted at convenience, as all the surface of the central section of the plate is available to position with detail the installation.

### Brief description of the drawings

Other advantages and characteristics of the invention will become evident from the following description, in which, entirely non-limitatively, are described some preferential embodiments of the invention, with reference to the appended drawings. The figures show:
Fig. 1, a plant view of a first embodiment of a plate according to the invention,
Fig. 2, a side profile view of a second embodiment of a plate according to the invention,
Fig. 3, a plant view of third embodiment of a plate according to the invention,
Fig. 4, a side profile of the plate of Fig. 3 once folded,
Fig. 5, plant view of a support device that comprises a plate and two attachment profiles.
Fig. 6, a perspective view of the support device of Fig. 5,
Fig. 7, a perspective view of an attachment profile according to the invention,
Fig. 8, a perspective view of an attachment profile symmetric to the attachment profile of Fig. 7,
Fig. 9, a plant view of an attachment profile before being folded,
Fig. 10, a plant view of a fourth embodiment of a plate according to the invention.
Fig. 11, a perspective view of a fifth embodiment of a plate according to the invention,
Fig. 12, a plant view of a plate of Fig. 11,
Fig. 13, a perspective view of the plate of Fig. 11 mounted on two attachment profiles according to the invention.
Fig. 14, a plant view of an extension element according to the invention.
Fig. 15, a perspective view of the support device of Fig. 13 with the extension element of Fig. 14.
Fig. 16, a perspective view of a reinforcement element.
Fig. 17, a perspective view of the support device of Fig. 13 with the reinforcement element of Fig. 16 and with an electric connection box.
Fig. 18, a plant view of a side prolongation element.
Fig. 19, a perspective view of the support device of Fig. 13 with two side prolongation elements.

### Detailed description of embodiments of the invention.

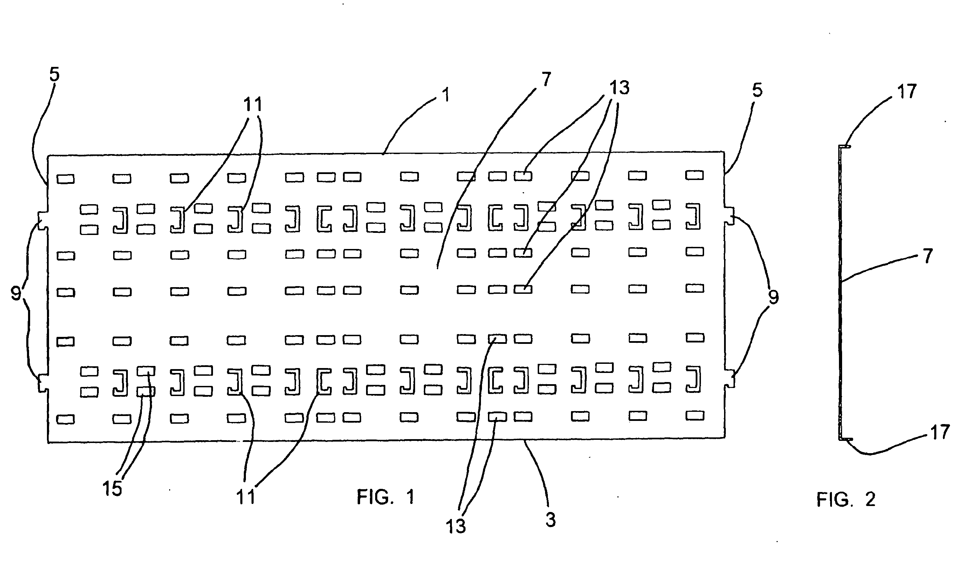

Fig. 1 shows a plate of the support device according to the invention. The plate has an upper edge 1, a lower edge 3, two side edges 5 and a central section 7. In each of the side edges 5 there are two protuberances in hook form 9 that have their free end orientated towards the lower edge 3. The plate further has a plurality of first holes 11 in the central section 7. The first holes 11 are expanded and substantially with a C form (in some cases inverted) although in their lower end they have an upwardly prolongation. It can be thereby observed that each of the first holes 11 define a hook equal to the hooks 9 arranged in the side edges 5. In this manner the plate can have a length (measured in horizontal direction) large enough for the most part of the usual applications. In the case that it is necessary a plate of lower length it is possible to cut it in vertical direction, parallel to a side edge 5 so that the cutting line passes through the base of the hooks defined by the first holes 11. The hooks so obtained comply then with the function of the hooks 9 that form the protuberances through which the plate is attached.

The hooks 9 of the left side edge 5 of the plate are at the same height of the hooks 9 of the right side edge 5 of the plate, forming pairs of hooks 9 mutually opposed but at the same height. Furthermore the first holes 11 are arranged in two strings, each of them is at the height of a pair of hooks 9 mutually opposed. In this manner if the plate is cut as above indicated, the hook obtained after the cut is again aligned in height with the hook 9 of the opposed side edge 5.

The plate further comprises second holes 13. These second holes 13 are gathered in columns so that in each column first holes 11 are sandwiched. In the case of first holes 11 defining a hook 9 towards the right (seen as shown in Fig. 1), it can be observed that the left edges of the second holes 13 are aligned in vertical direction with the left end edges of the first holes 11 of the same column. It is thereby defined a cutting line that can be easily followed by a worker in order to obtain a new side edge 5 (in the case that we explained a new right side edge 5) that is linear and with two hooks 9. It can be observed that the same situation takes place for the case of the first holes 11 defining a hook 9 towards the left.

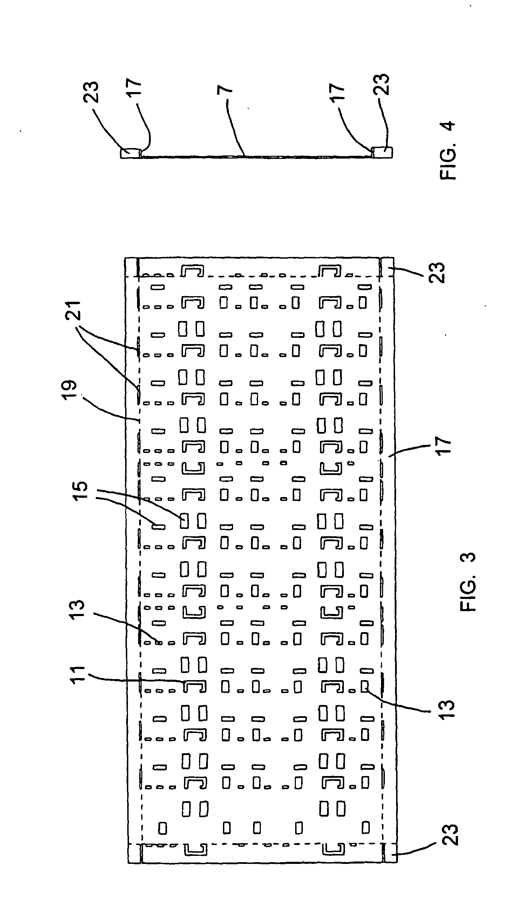

The plate additionally contains third holes 15. In general it is advisable that these plates have a plurality of holes, thereby increasing the possibilities of attachment of elements on them in any position. The second holes 13 can also perform this function. The second holes 13 can be equal to the third holes 15, as shown in Fig. 1, however they can be also different from the third holes 15, as for example in the case shown in Fig. 3. Moreover the second holes 13 are not necessarily equal with respect to one another. Neither third holes 15 are necessarily equal with respect to one another.

Fig. 2 shows a plate of a support device having end borders 17 both in its upper edge 1 and in its lower edge 3 that are folded 90° with respect to the central section 17. As it has been previously commented, these end borders 17 are optional.

Fig. 3 shows another plate of a support device according to the invention having first holes 11, second holes 13 and third holes 15 which perform the functions already described above, although they have different geometric forms. In particular the second holes 13 comprise holes of different sizes. In this manner the functions that they must performed can be combined: on the one hand to define a cut edge and on the other hand to serve for the attachment of elements on the plate. The plate of Fig. 3 further shows weakening lines 19 formed by a plurality of weakening holes 21. These weakening holes 21 are expanded and extend in the direction of the weakening lines 19. The weakening lines 19 aim to make easier the folding of the end borders 17.

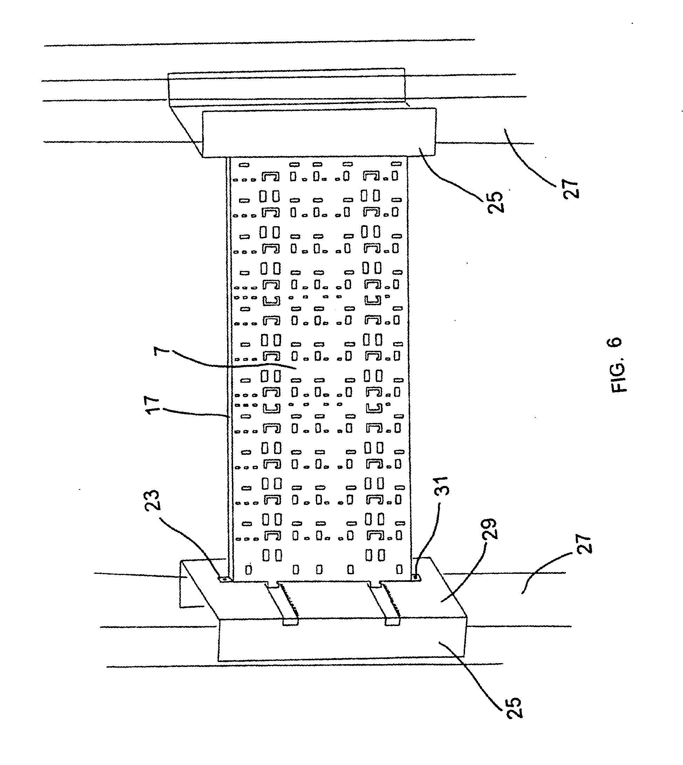

Additionally one of the weakening holes 21, the one that is arranged at the end of the weakening line 19, is open. That allows defining a flange 23 which, once the end border 15 is folded, in turn, can be folded with respect to the end border 17. That is shown in Fig. 4. As it can be seen in Fig. 6, this flange 23 allows a better attachment of the plate.

It can be also observed that the weakening holes 21 have additionally an end vertically aligned with one end of the first holes 11. For example the first holes 11 that define a hook 9 towards the right, have their left end vertically aligned with the left end of the weakening holes 21. On the other hand the first holes 11 that define a hook 9 towards the left have their right end vertically aligned with the right end of the weakening holes 21. In this manner when making a cut in vertical direction along the aligned edges, a flange 23 is automatically obtained.

Both the left edge and the right edge of the plate of Fig. 3, must be cut for their use, although in the case that the plate can be used in its maximum length the cut of the remaining material could be replaced by its folding. This folding thereby would perform a similar function to that of the flanges 23.

In Fig. 4 it is observed how will be a plate, such as for example that represented in Fig. 3, after folding the end borders 17 and the flanges 23.

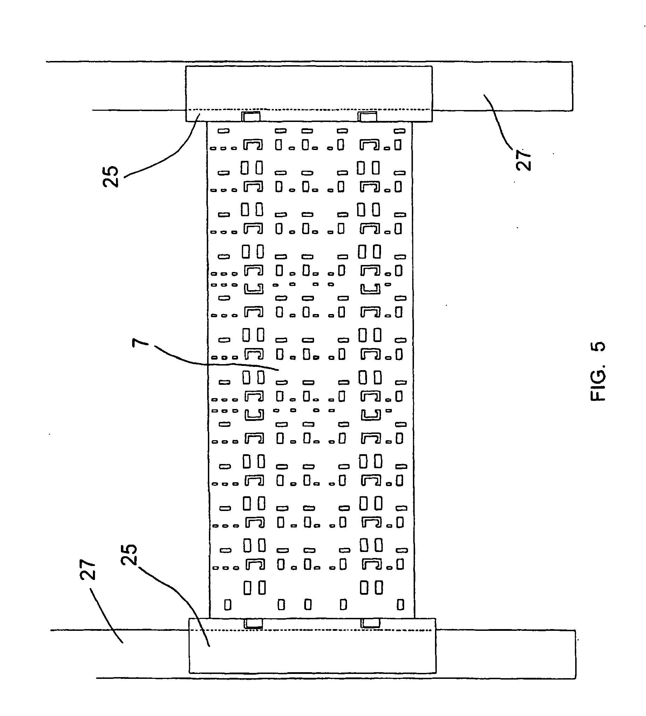

Fig. 5 shows a plant view of a support device according to the invention. The plate is attached to two attachment profiles 25 which, in turn, are attached to two partition wall profiles 27. The plate represented in Fig. 5, can be either the plate of Fig. 3, once the end borders 17 are folded or it can be a similar plate but without including said end borders 17. Fig. 6 shows a perspective view of a support device according to the invention. In this case it is observed that the plate has end borders 17, folded 90° with respect to the central section 7, and flanges 23 that are supported on the base 29 of the attachment profiles 25. Optionally the flange 23 can be attached to the base 29 of the attachment profile 25 by a screw 31 or similar.

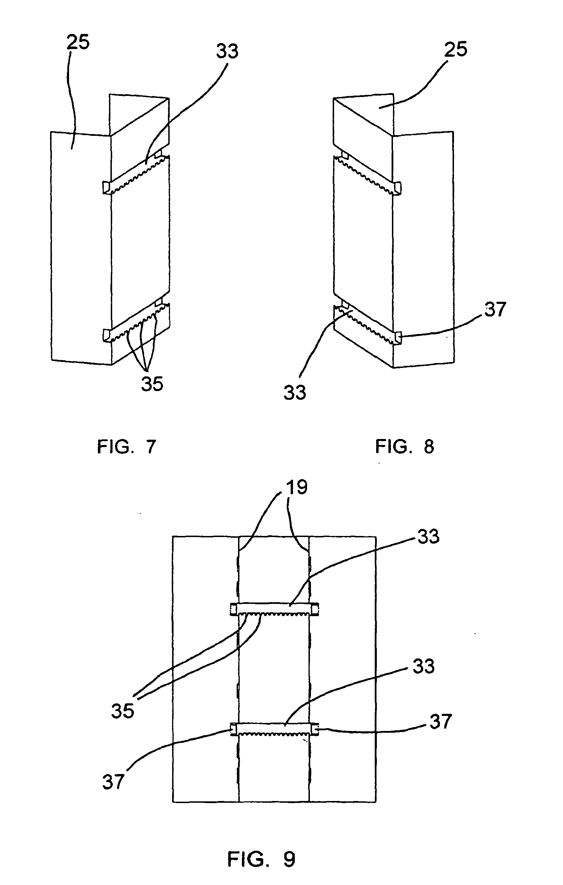

Figs. 7 and 8 shows a pair of attachment profiles 25, which are symmetrical with respect to one another. Preferably the attachment profiles 25 are obtained from a flat sheet properly punched, as it is shown for example in Fig. 9. The flat sheet has two anchoring holes 33 each one of them having a plurality of notches 35 in their lower end. These notches 35 have an enough width to housing a hook 9. The sheet also has weakening lines 19 which will allow their subsequent folding in order to shape the attachment profiles 25 in U form. In the example shown in Fig. 9 the weakening lines 19 have been formed through the addition of expanded holes of a similar form to the weakening holes 21 shown in Fig. 3. Nevertheless either in this case and in the case of Fig. 3, an expert in the art could make the weakening lines 19 could be made using any other known means.

As it can be observed in Fig. 9, in the ends of the anchoring holes 33, there are flanges 37. The folding of these flanges 37 will allow that the attachment profile 25 has the anchoring holes 33, which are laterally accessible. Thus, once the attachment profiles 25 are mounted in the corresponding partition wall profiles 27 (see Fig. 5 and 6) it is still possible to remove and to arrange the plates laterally. Alternatively it would be possible to punch the sheet shown in Fig. 9 without the flanges 37.

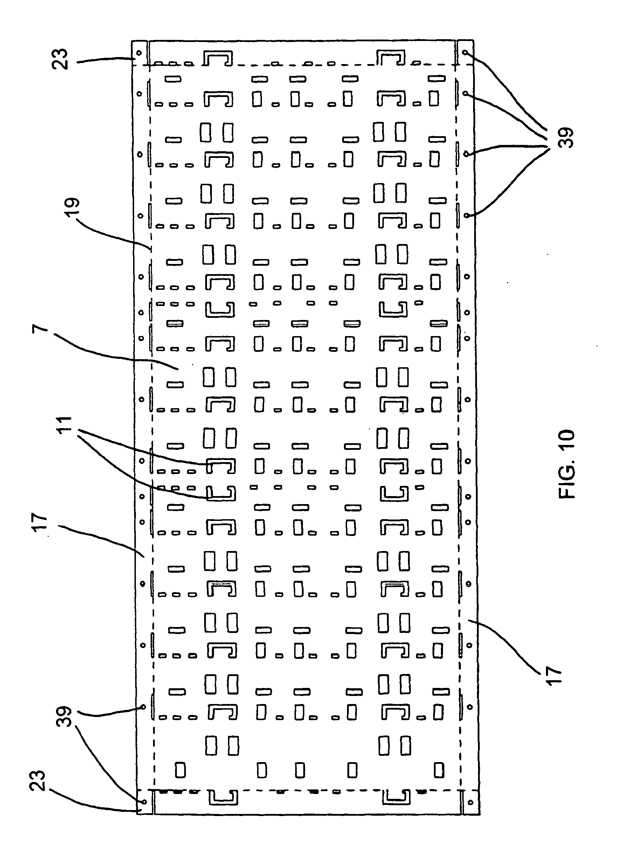

Fig. 10 shows another plate of a support device according to the invention. This plate is similar to that represented in Fig. 3, but it includes fourth holes 39, arranged in the end borders 17. These fourth holes 39 are arranged so that there is always a fourth hole 39 in the flange 23, regardless of the area at which the plate is cut. These fourth holes 39 make easier the subsequent attachment of the flange 23 to the base 29 of the attachment profile 25, for example by a screw 31, as it is shown in Fig. 6.

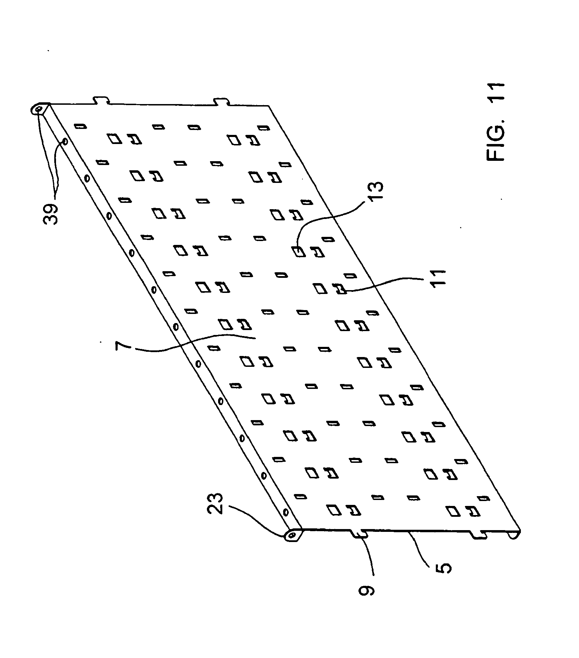

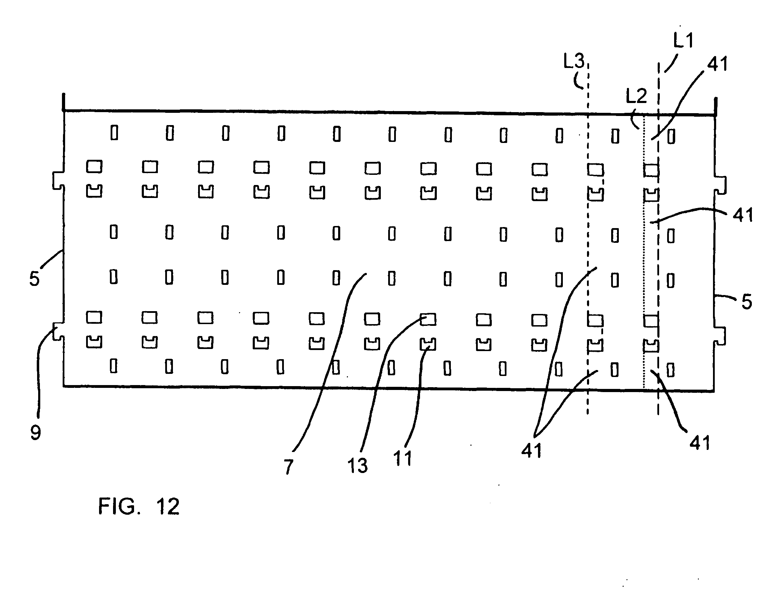

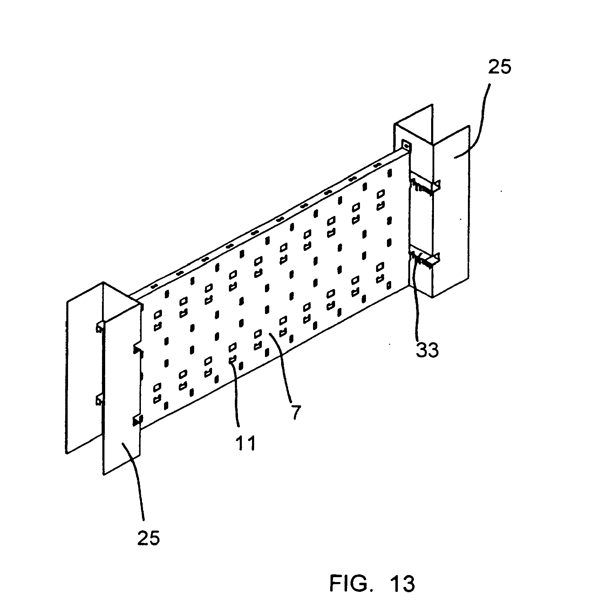

Figs. 11, 12 and 13, show another embodiment of a plate according to the invention. In this case the first holes 11 only reproduce the lower part of the protuberance 9. The end section of the protuberance 9 is not punched but it is generated by the cut that is linear and parallel to the side edge 5, that will connect the first hole 11 with the second hole 13 arranged on said first 11. In the present example the linear and parallel cut can be made in two ways. The first way consists in making a single cut that extends from the upper edge 1 to the lower edge 3 and that passes through the ends of the protuberances 9, as represented by line L1 in Fig. 12. The remaining material 41 is folded 90° along line L2 so that it performs a similar function to that of flanges 23, as it has been previously commented. Alternatively a cut by sections can be made, as shown in line L3 of Fig. 12. In this case the cut passes through the ends of protuberances 9 but continues at what it was line L2, so that the remaining material 41 is cut instead of folded. The geometry of the first holes 11 shown in Fig. 12 has the advantage that each of the first holes 11 indistinctly serves to form a protuberance towards any of the two side edges 5.

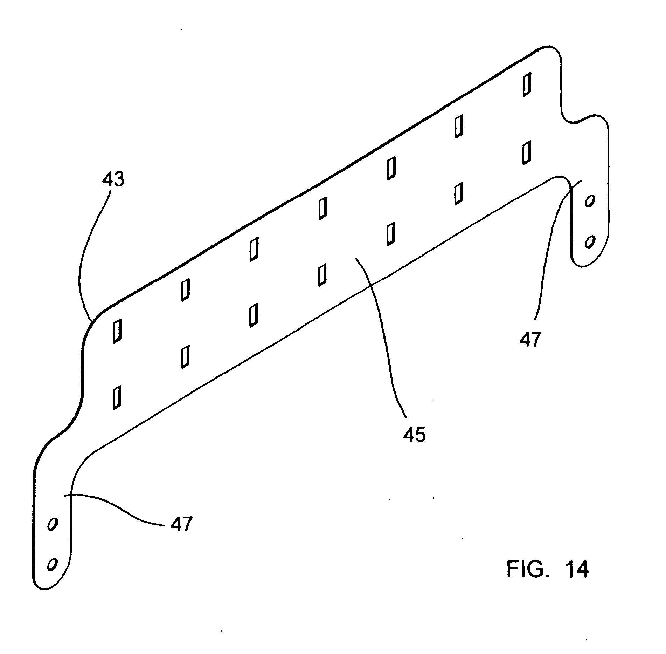

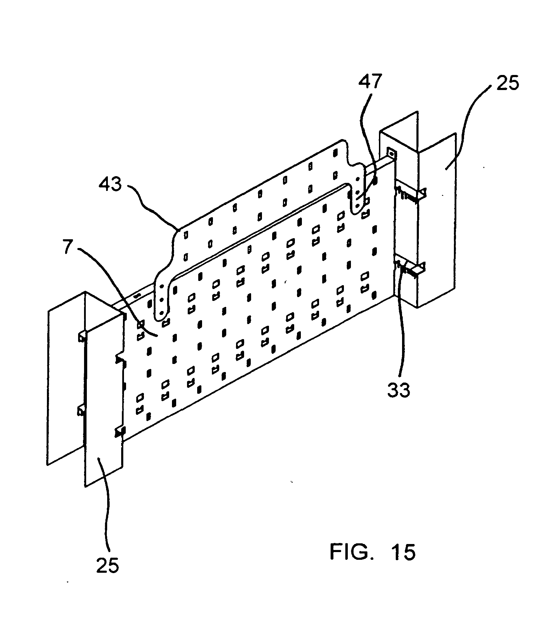

In some cases it can be possible that the useful surface of the plate is too small due to the size or amount of elements that are wished to attach on it. In these cases it is advantageous that the support device further comprises an extension element 43 substantially formed by a flat sheet having a central area 45 substantially rectangular and at least an attachment arm 47 suitable for being attached to central section 7. In this way this extension element 43 can be connected to the plate (by attaching, for example screwdown, the separation arm to the central section 7) and thus the useful area of the assembly is enlarged. Preferably the extension element 43 has two attachment arms 47, so that the assembly has substantially a C form. An example of an extension element 43 according to the invention can be seen in Figs. 14 and 15.

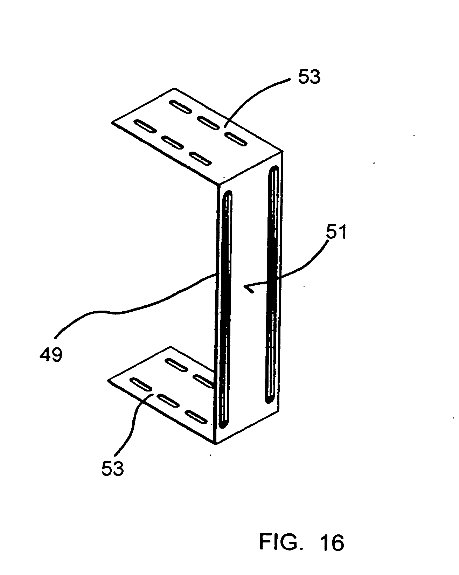

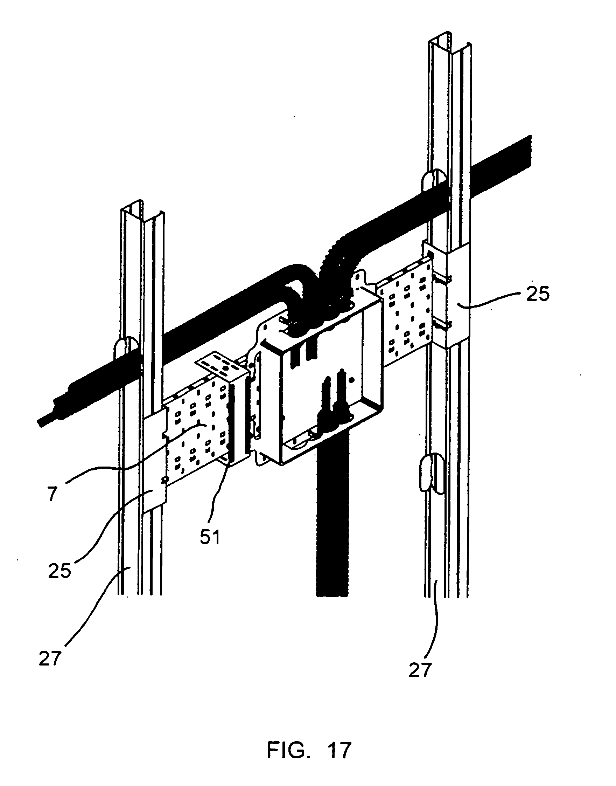

In the case that some elements are installed in the central part of the central section 7 (for example an electric switch) it is possible that the chalk plate (that is in cantilever between the two partition wall profiles 27 between which it is mounted) moves with respect to the installed element when cramping the head on it, with the consequent negative aesthetic effect. In this regard it can be advantageous that the support device further comprises a reinforcement element 49, for example as that shown in Figs. 16 and 17, with a support surface 51 parallel to the central section 7 and at least a separation arm 53 suitable for being attached in the plate and that separates the support surface 51 of the plate in perpendicular direction thereto. In this manner the support surface 51 serves as support for the chalk plate so that the latter does not move with respect to the element installed on the plate.

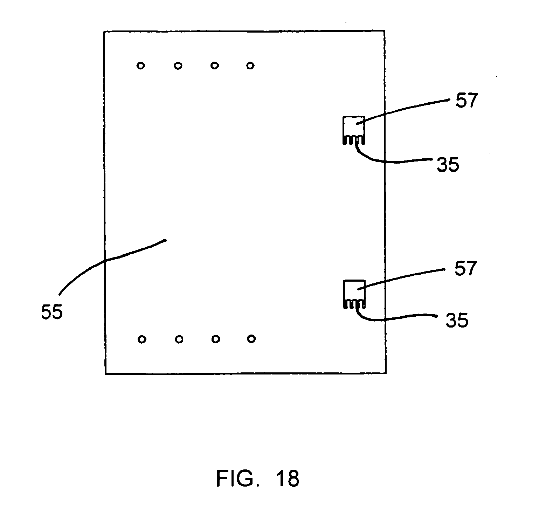

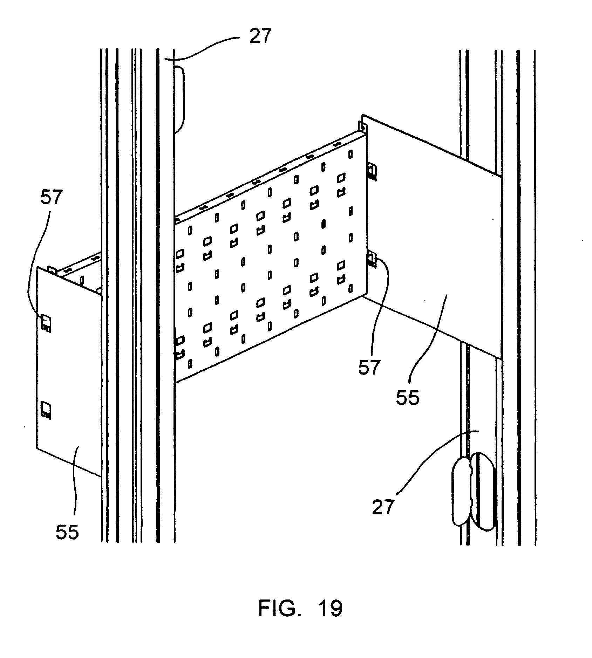

In certain cases it can be necessary that the plate is not exactly arranged between the two partition wall profiles 27 but it is distant from them in perpendicular direction. Therefore it is advantageous that the support device further comprises two side prolongation elements 55 arranged in each of the side edges 5, in which each side prolongation element 55 is provided with a retaining hole 57 for each of the protuberances 9. An example of these side prolongation elements 55 can be observed in Figs. 18 and 19. The side prolongation element 55 is attached by an end to the partition wall profiles 27 and has in the opposing end the retaining hole 57, that preferably has a plurality of notches 35 similar to the notches 35 of the anchoring holes 33 in the attachment profiles 25. In these retaining holes 57 it will be possible to attach again the plate through its protuberances 9 so that the plate is separated a certain distance (in perpendicular direction thereto) of the partition wall profiles 27.

## Claims

1. Support device comprising a plate with a plurality of holes, said plate defining an upper edge (1), a lower edge (3), two side edges (5) and a central section (7), wherein said support device defines a support area when it is mounted between two vertically arranged partition walls, wherein said plate comprises at least a protuberance (9) in each of said side edges (5), **characterised in that** it comprises a plurality of first holes (11) in said central section (7), wherein each of said first holes (11) reproduces the lower part of said protuberance (9), so that at least one of said first holes (11), by means of a cut line parallel to said side edges (5), forms a new protuberance of the same shape, and **in that** said support device comprises at least an attachment profile (25) with a cross section substantially U-shaped with at least one anchoring hole (33) suitable for housing said protuberance, where said anchoring hole (33) extends horizontally along the attachment profile.

2. Support device according to claim 1, **characterised in that** said protuberance (9) has a hook form, wherein said hook has its free end orientated towards said lower edge (3).

3. Support device according to one of claims 1 or 2, **characterised in that** each of said first holes (11) is at the same height than at least one of said protuberances (9).

4. Support device according to any of claims 1 to 3, **characterised in that** said plate comprises second holes (13) wherein each of said second holes (13) has at least an edge that is aligned in vertical direction with an edge of at least one of said first holes (11).

5. Support device according to any of claims 1 to 4, **characterised in that** said plate at least comprises an end border (17) separated of said central section (7) by weakening lines (19).

6. Support device according to claim 5, **characterised in that** said weakening lines (19) are formed by a plurality of expanded weakening holes (21), wherein each of said first holes (11) has an end that is aligned in vertical direction with an end of a weakening hole (21).

7. Support device according to one of claims 5 or 6, **characterised in that** said weakening lines (19) have in each end a weakening hole (21) that extends until one of said side edges (5), so that said end border (17) defines a flange (23).

8. Support device according to any of claims 1 to 7, **characterised in that** said anchoring hole (33) extends horizontally along all the length of the base (29) of said attachment profile (25).

9. Support device according to any of claims 1 to 8, **characterised in that** said anchoring hole (33) has a plurality of notches (35) in its lower end.

10. Support device according to any of claims 1 to 9, **characterised in that** it comprises a plate with two of said protuberances arranged in each of said side edges (5), and two of said attachment profiles (25) each one with two anchoring holes (33) having each one of them a plurality of notches (35) in its lower end.

11. Support device according to any of claims 1 to 10, **characterised in that** it comprises an extension element (43) formed by a flat sheet that has a central area (45), substantially rectangular, and at least an attachment arm (47) suitable for being attached to said central section (7).

12. Support device according to any of claims 1 to 11, **characterised in that** it comprises a reinforcement element (49) with a support surface (51) parallel to said central section (7) and at least a separation arm (53) suitable for being attached in said plate and that separates said support surface (51) of said plate in perpendicular direction to said plate.

13. Support device according to any of claims 1 to 12, **characterised in that** it comprises two side prolongation elements (55) arranged in each of said side edges (5), wherein each side prolongation element (55) is provided with a retaining hole (57) for each one of said protuberances (9).

## Patentansprüche

1. Trägervorrichtung, aufweisend eine Platte mit einer Vielzahl von Löchern, wobei die Platte eine Oberkante (1), eine Unterkante (3), zwei Seitenkanten (5) und einen Mittelabschnitt (7) definiert, wobei die Trägervorrichtung einen Tragbereich definiert, wenn sie zwischen zwei vertikal angeordneten Trennwänden montiert ist, wobei die Platte mindestens eine Protuberanz (9) in jeder der Seitenkanten (5) aufweist, **dadurch gekennzeichnet, dass** sie eine Vielzahl von ersten Löchern (11) in dem Mittelabschnitt (7) aufweist, wobei jedes der ersten Löcher (11) den unteren Teil der Protuberanz (9) nachbildet, so dass mindestens eines der ersten Löcher (11) mittels einer Schnittlinie parallel zu den Seitenkanten (5) eine neue Protuberanz der selben Form bildet, und dass die Trägervorrichtung mindestens ein Befestigungsprofil (25) mit einem im Wesentlichen U-förmigen Querschnitt mit mindestens einem Verankerungsloch (33) aufweist, das geeignet ist, um die Protuberanz aufzunehmen, wobei sich das Verankerungsloch (33) horizontal entlang dem Befestigungsprofil erstreckt.

2. Trägervorrichtung gemäß Anspruch 1, **dadurch gekennzeichnet, dass** die Protuberanz (9) eine Hakenform hat, wobei der Haken mit seinem freien Ende in Richtung auf die Unterkante (3) ausgerichtet ist.

3. Trägervorrichtung gemäß einem der Ansprüche 1 oder 2, **dadurch gekennzeichnet, dass** jedes der ersten Löcher (11) an der selben Höhe ist wie mindestens eine der Protuberanzen (9).

4. Trägervorrichtung gemäß einem der Ansprüche 1 bis 3, **dadurch gekennzeichnet, dass** die Platte zweite Löcher (13) aufweist, wobei jedes der zweiten Löcher (13) mindestens eine Kante aufweist, die in vertikaler Richtung mit einer Kante von mindestens einem der ersten Löcher (11) ausgerichtet ist.

5. Trägervorrichtung gemäß einem der Ansprüche 1 bis 4, **dadurch gekennzeichnet, dass** die Platte mindestens einen Endrand (17) aufweist, der von dem Mittelabschnitt (7) durch Schwächungslinien (19) getrennt ist.

6. Trägervorrichtung gemäß Anspruch 5, **dadurch gekennzeichnet, dass** die Schwächungslinien (19) durch eine Vielzahl von ausgedehnten Schwächungslöchern (21) gebildet werden, wobei jedes der ersten Löcher (6) ein Ende aufweist, das in vertikaler Richtung mit einem Ende eines Schwächungslochs (21) ausgerichtet ist.

7. Trägervorrichtung gemäß einem der Ansprüche 5 oder 6, **dadurch gekennzeichnet, dass** die Schwächungslinien (19) in jedem Ende ein Schwächungsloch (21) haben, das sich bis zu einer der Seitenkanten (5) erstreckt, so dass der Endrand (17) einen Flansch (23) definiert.

8. Trägervorrichtung gemäß einem der Ansprüche 1 bis 7, **dadurch gekennzeichnet, dass** sich das Verankerungsloch (33) horizontal entlang der Länge der Basis (29) des Befestigungsprofils (25) erstreckt.

9. Trägervorrichtung gemäß einem der Ansprüche 1 bis 8, **dadurch gekennzeichnet, dass** das Verankerungsloch (33) eine Vielzahl von Einkerbungen (35) an seinem unteren Ende aufweist.

10. Trägervorrichtung gemäß einem der Ansprüche 1 bis 9, **dadurch gekennzeichnet, dass** sie eine Platte mit zwei der Protuberanzen aufweist, die in jeder der Seitenkanten (5) angeordnet sind, und zwei der Befestigungsprofile (25) jeweils mit zwei Verankerungslöchern (33) jeweils mit einer Vielzahl von Einkerbungen (35) an deren unteren Ende.

11. Trägervorrichtung gemäß einem der Ansprüche 1 bis 10, **dadurch gekennzeichnet, dass** sie ein Anbauelement (43) aufweist, das durch ein flaches Blech gebildet wird, das einen im Wesentlichen rechtwinkligen Mittelbereich (45) aufweist und mindestens einen Befestigungsarm (47), der geeignet ist zur Befestigung an dem Mittelabschnitt (7).

12. Trägervorrichtung gemäß einem der Ansprüche 1 bis 11, **dadurch gekennzeichnet, dass** sie ein Verstärkungselement aufweist mit einer Trägerfläche (51) parallel zu dem Mittelabschnitt (7), und mindestens einen Trennarm (53), der zur Befestigung an der Platte geeignet ist und dei Trägerfläche (51) der Platte in rechtwinkliger Richtung von der Platte trennt.

13. Trägervorrichtung gemäß einem der Ansprüche 1 bis 12, **dadurch gekennzeichnet, dass** sie zwei Seitenverlängerungselemente (55) aufweist, die in jeder der Seitenkanten (5) angeordnet sind, wobei jedes Seitenverlängerungselement (55) mit einem Halteloch (57) für jede der Protuberanzen (9) versehen ist.

## Revendications

1. Dispositif de support comprenant une plaque pourvue d'une pluralité de trous, ladite plaque définissant un bord supérieur (1), un bord inférieur (3), deux bords latéraux (5) et une section centrale (7), dans lequel ledit dispositif de support définit une zone de support lorsqu'il est monté entre deux cloisons disposées verticalement, ladite plaque comprenant au moins une protubérance (9) dans chacun desdits bords latéraux (5), **caractérisé en ce qu'**il comprend une pluralité de premier trous (11) dans ladite section centrale (7), chacun desdits premiers trous (11) reproduisant la partie inférieure de ladite protubérance (9), de telle façon qu'au moins l'un desdits premiers trous (11), au moyen d'une ligne de découpe parallèle auxdits bords latéraux (5), forme une nouvelle protubérance de la même forme, et **en ce que** ledit dispositif de support comprend au moins un profilé de fixation (25) ayant une section transversale sensiblement en forme de U et comportant au moins un trou d'ancrage (33) pouvant recevoir ladite protubérance, ledit trou d'ancrage (33) s'étendant horizontalement le long du profilé de fixation.

2. Dispositif de support selon la revendication 1, **caractérisé en ce que** ladite protubérance (9) a une forme de crochet, l'extrémité libre dudit crochet étant orientée vers ledit bord inférieur (3).

3. Dispositif de support selon l'une des revendications 1 ou 2, **caractérisé en ce que** chacun desdits premiers trous (11) est à la même hauteur qu'au moins l'une desdites protubérances (9).

4. Dispositif de support selon l'une quelconque des revendications 1 à 3, **caractérisé en ce que** ladite plaque comprend des seconds trous (13), chacun desdits seconds trous (13) ayant au moins un bord aligné en direction verticale sur un bord d'au moins l'un desdits premiers trous (11).

5. Dispositif de support selon l'une quelconque des revendications 1 à 4, **caractérisé en ce que** ladite plaque comprend au moins une bordure d'extrémité (17) séparée de ladite section centrale (7) par des lignes d'affaiblissement (19).

6. Dispositif de support selon la revendication 5, **caractérisé en ce que** lesdites lignes d'affaiblissement (19) sont formées par une pluralité de trous d'affaiblissement évasés (21), chacun desdits premiers trous (11) ayant une extrémité alignée en direction verticale sur une extrémité d'un trou d'affaiblissement (21).

7. Dispositif de support selon l'une des revendications 5 ou 6, **caractérisé en ce que** lesdites lignes d'affaiblissement (19) présentent, à chaque extrémité, un trou d'affaiblissement (21) qui s'étend jusqu'à l'un desdits bords latéraux (5) de sorte que ladite bordure d'extrémité (17) définit une bride (23).

8. Dispositif de support selon l'une quelconque des revendications 1 à 7, **caractérisé en ce que** ledit trou d'ancrage (33) s'étend horizontalement sur toute la longueur de la base (29) dudit profilé de fixation (25).

9. Dispositif de support selon l'une quelconque des revendications 1 à 8, **caractérisé en ce que** ledit trou d'ancrage (33) comporte une pluralité d'encoches (35) à son extrémité inférieure.

10. Dispositif de support selon l'une quelconque des revendications 1 à 9, **caractérisé en ce qu'**il comprend une plaque pourvue de deux desdites protubérances, disposées dans chacun desdits bords latéraux (5), et de deux desdits profilés de fixation (25) dotés chacun de deux trous d'ancrage (33) dont chacun comporte une pluralité d'encoches (35) à son extrémité inférieure.

11. Dispositif de support selon l'une quelconque des revendications 1 à 10, **caractérisé en ce qu'**il comprend un élément d'extension (43) formé par une tôle plane présentant une région centrale (45), sensiblement rectangulaire, et au moins un bras de fixation (47) pouvant être fixé à ladite section centrale (7).

12. Dispositif de support selon l'une quelconque des revendications 1 à 11, **caractérisé en ce qu'**il comprend un élément de renfort (49) ayant une surface support (51) parallèle à ladite section centrale (7) et au moins un bras de séparation (53) pouvant être fixé dans ladite plaque et qui sépare ladite surface support (51) de ladite plaque dans une direction perpendiculaïre à ladite plaque.

13. Dispositif de support selon l'une quelconque des revendications 1 à 12, **caractérisé en ce qu'**il comprend deux éléments de prolongement latéraux (55) disposés dans chacun bords latéraux (5), chaque élément de prolongement latéral (55) étant pourvu d'un trou de retenue (57) pour chacune desdites protubérances (9).
